# EUROPÄISCHE PATENTSCHRIFT

(11) **EP 2 228 323 B1**
(45) Veröffentlichungstag und Bekanntmachung des Hinweises auf die Patenterteilung: **28.11.2012**
(21) Anmeldenummer: 09405043.2
(22) Anmeldetag: 09.03.2009
(51) Int. Cl.: B65G 11/10, F16L 21/00, F16L 25/12, F16L 27/107

(54) **Einrichtung zur Verbindung beabstandeter Leitungsenden zur Bildung einer wenigstens teilweise geschlossenen Förderleitung**
Device for connecting the ends of conduits at a distance from each other in order to create a supply conduit which is at least partially closed
Dispositif destiné à la liaison d'extrémités de conduites espacées pour la formation d'une conduite de refoulement au moins partiellement fermée

(43) Veröffentlichungstag der Anmeldung: 15.09.2010
(73) Patentinhaber: Zimmermann Verfahrenstechnik AG, 4142 Münchenstein (CH)
(72) Erfinder: Zimmermann, Fritz, 4133 Pratteln (CH)
(74) Vertreter: Fenner, Werner

(56) Entgegenhaltungen:
- EP-A- 0 105 948
- EP-A- 1 600 681
- DE-A1- 2 748 302
- GB-A- 801 160

## Beschreibung

Die Erfindung betrifft eine Einrichtung zur Verbindung getrennter, vorzugsweise einen zylindrischen Leitungsquerschnitt aufweisenden Leitungsenden zur Bildung einer wenigstens teilweise geschlossenen Förderleitung für den Transport von schüttfähigen und/oder gasförmigen Stoffen, bestehend aus einer wenigstens einem Leitungsende zugeordneten Befestigungsanordnung, die mit der ein vorzugsweise flexibles Leitungselement an dem Leitungsende dicht festhaltenden Einspannvorrichtung ausgebildet ist.

Die Förderleitung, Rohr- oder Schlauchleitung, kann alternativ einen rechteckigen oder einen anderen, von der zylindrischen form abweichenden Querschnitt, beispielsweise eliptisch, polygonförmig oder dgl. aufweisen, und zu den schüttfähigen Stoffen gehören u.a. Granulate, Pulver und Flüssigkeiten.

Vorzugsweise ist das Leitungselement flexibel, selbstverständlich dicht ausgebildet, beispielsweise mit Polyurethan beschichteten Geweben oder aus PTFE-Laminaten, die für Lagerbehälter, Trichter oder Kompensatoren verwendet werden. Solche flexiblen Werkstoffe gestatten grössere Toleranzen nicht aufeinander ausgerichteter Leitungsenden.

Die Verwendung metallischer Werkstoffe oder geformter Kunststoffe für das Leitungselement erfordert eine genauere Ausrichtung der zu verbindenden Leitungsenden, insbesondere in einer explosionsgefährdeten Umgebung.

Hierbei handelt es sich um Förderleitungen mit einer Nennweite von 150 mm und mehr, wobei die zu verbindenden Leitungsenden nicht zwingend den gleichen Leitungsquerschnitt aufweisen müssen.

Bei Benutzern insbesondere der Pharmaindustrie besteht ein grosses Interesse, Einrichtungen der eingangs erwähnten Art dauerhaft, zuverlässig und auf einfache Art verwenden zu können. Dabei sind aufgrund der hohen Qualitätsansprüche an die zu transportierenden Stoffe zur Respektierung entsprechender Vorschriften, beispielsweise die Grundsätze der GMP (Good Manufactoring Practice) und der FDA (Food and Drug Administration) sowie hohe Anforderungen an die Konstrukteure solcher Einrichtungen gestellt. Undichtheit und Verschmutzung an den Uebergangsstellen sind zu verhindern.

Die vorveröffentlichte EP-A-0 105 948 beschreibt eine lösbare Klemmverbindung zum Befestigen von sog. Dichtungsmanschetten für druckdichte flexible Verbindungen im Grossanlagenbau, insbesondere Kanälen grosser Abmessungen. Zum Einspannen von auf die Dichtungsmanschette aufgesetzten Spannringen sind profilierte Klemmleisten vorgesehen, die einen an das Aussenprofil der Spannringe angepassten Abschnitt aufweisen.

Daraus stellt sich die Aufgabe an die vorliegende Erfindung, eine Einrichtung zur Verbindung getrennter Leitungsenden zur Bildung einer wenigstens teilweise geschlossenen Förderleitung für den Transport von schütt- und/oder gasförmigen Stoffen zu schaffen, mit der die vorschriftsgemässen hohen Anforderungen beim Transport und der Lagerung eingehalten werden.

Erfindungsgemäss wird diese Aufgabe dadurch gelöst, dass ein stutzenförmiges Leitungsende einen Abschnitt aufweist, an dessen Aussenseite ein Endabschnitt des Leitungselementes mittels einer Manschette der mit dem Leitungsende verbundenen Einspannvorrichtung befestigt ist und dass die Einspannvorrichtung einen Gegenflansch aufweist, an dem eine der Manschette zugewiesene Fassung befestigt ist, und die mit einem hinter dem Leitungsende an der Förderleitung befestigten Ringflansch lösbar verbunden ist.

Anschliessend wird die Erfindung unter Bezugnahme auf die Zeichnung und auf den zitierten Stand der Technik, auf die bezüglich aller in der Beschreibung nicht näher erwähnten Einzelheiten verwiesen wird, anhand zweier Ausführungsbeispiele erläutert. In der Zeichnung zeigen:
- Fig. 1: einen auszugsweisen Längsschnitt durch eine zwei Leitungsenden zu einer geschlossenen Förderleitung verbindende erfindungsgemässe Einrichtung,
- Fig. 2: einen Auszug einer alternativen Ausführungsform der erfindungsgemässen Einrichtung und
- Fig. 3: einen Querschnitt der in der erfindungsgemässen Einrichtung verwendeten Manschette.

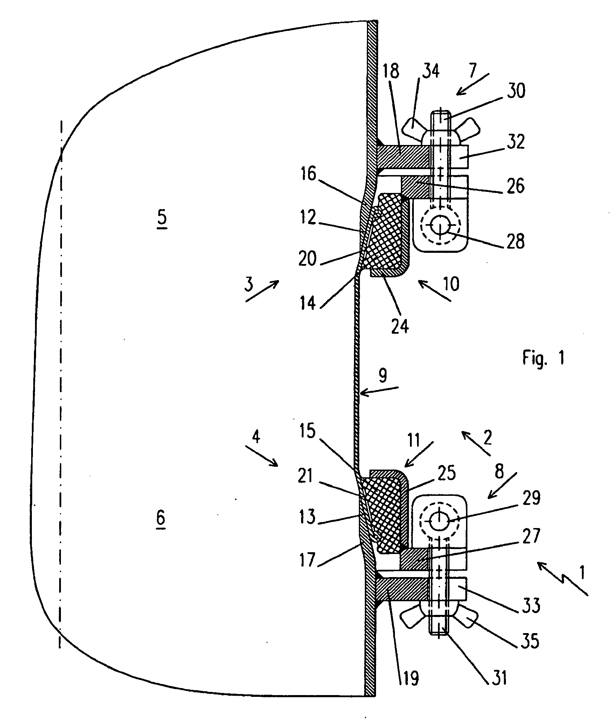

Die Fig. 1 veranschaulicht eine Einrichtung 1 zur Verbindung getrennter, vorzugsweise einen zylindrischen Leitungsquerschnitt aufweisenden Leitungsenden 3, 4 zur Bildung einer wenigstens teilweise geschlossenen, in einem Halbschnitt abschnittweise dargestellten Förderleitung 2, die in Fig. 1 senkrecht verläuft, jedoch auch horizontal oder schräg nach oben oder unten verlaufend ausgerichtet sein könnte, und zum Zweck des Transportes von schütt- und/oder gasförmigen Stoffen dient, wobei auch Flüssigkeiten davon betroffen sind. Die Leitungsenden 3, 4 stehen sich mit Oeffnungen 5, 6 etwa fluchtend gegenüber und es ist ihnen eine Befestigungsanordnung 7, 8 zugeordnet, die mit einer ein vorzugsweise flexibles Leitungselement 9 an dem Leitungsende 3, 4 dicht festhaltenden Einspannvorrichtung 10, 11 ausgebildet ist.

Es ist durchaus möglich, die Einrichtung 1 auch dort zu verwenden, insbesondere bei einer senkrechten Anordnung der Förderleitung 2, wo nur das obere Leitungsende 3 mit einer Befestigungsanordnung 7 versehen ist und das gegenüberliegende Ende des Leitungselementes 9 frei hängend in das untere Leitungsende 5 eintaucht. Fig. 1 zeigt eine bevorzugte Ausführungsform, bei der das Leitungselement 9 mit beiden Enden jeweils an einem Leitungsende 3, 4 befestigt ist. Hierzu weisen die stutzenförmigen Leitungsenden 3, 4 einen Abschnitt auf, an dessen Aussenseite resp. Aussenumfang jeweils ein Endabschnitt 12, 13 des Leitungselementes 9 mittels einer diesen umgebenden Manschette 14, 15, die aus einem metallischen oder nichtmetallischen Werkstoff ausgebildet sein kann, dicht angepresst wird. Eine aus einem nichtmetallischen Werkstoff gebildete Manschette 9 weist eine höhere Elastizität auf, kann jedoch nicht mit einer so hohen Presskraft wie eine metallische Manschette 9 angepresst werden.

Bei der Ausführungsform nach Fig. 1 weisen die stutzenförmigen Leitungsenden 3, 4 einen zur Oeffnung 5, 6 hin sich nach innen stetig verändernden resp. verjüngenden Leitungsquerschnitt auf. Die Fig. 1 zeigt eine kegelstumpfförmige Endform der Leitungsenden 3, 4, an der die Endabschitte 12, 13 des Leitungselementes 9 anliegen.

Handelt es sich um flexible Leitungselemente 9, so sind diese vorteilhaft aus einem wenigstens einseitig beschichteten Gewebe konfektioniert ausgebildet. Dadurch lässt sich ein Endabschnitt 12, 13 des Leitungselementes 9 auf einfache Weise über ein stutzenförmiges Leitungsende 3, 4 schieben. Darüberhinaus ist jeweils ein vorderer Abschnitt 16, 17 der sich nach innen stetig verändernden Leitungsenden 3, 4 durch ein sich zur Oeffnung 5, 6 hin erstreckende zylindrische Innenform ausgebildet.

Dadurch dass die Endabschnitte 12, 13 des Leitungselementes 9 jeweils über die Oeffnung 5, 6 vorstehen und von der Aussenseite durch die Manschette 14, 15 beaufschlagt werden, verengt sich der Durchflussquerschnitt im Bereich des Leitungselementes 9 geringfügig und verhindert dadurch einen Aufbau von Rückständen der transportierten Stoffe an der Innenwand der Förderleitung 2 im Oeffnungsbereich 5, 6.

Die Einspannvorrichtung 10, 11, durch die das Leitungselement 9 endseitig über die Manschette 14, 15 an den Leitungsenden 3, 4 jeweils festgepresst wird, ist Teil einer Befestigungsanordnung 7, 8, die einen an der Förderleitung 2 beispielsweise durch Schweissen befestigten Ringflansch 18, 19 aufweist.

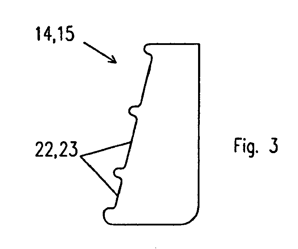

Das Leitungselement 9, auf das die Manschette 14, 15 an den Endabschnitten 12, 13 pressend einwirkt, kann einen wulstartigen Rand aufweisen, der mit der Manschette 14, 15 formschlüssig in Verbindung bringbar ist. Die Manschette 14, 15 die in Fig. 3 dargestellt ist, ist ringförmig ausgebildet und weist bei der Einrichtung nach Fig. 1 einen trapezförmigen Querschnitt auf, wobei zumindest der über den Endabschnitt 12, 13 des Leitungselementes 9 an den sich nach innen etwa stetig verändernden Abschnitt 16, 17 des Leitungsendes 3, 4 anlehnende Schenkel 20, 21 oder Einspannfläche des trapezförmigen Manschettenquerschnitts nutenartige Ausnehmungen 22, 23 resp. umlaufende Nuten aufweist, die erhabene Ringnoppen bilden, sodass eine form- und/oder kraftschlüssige Verbindung entsteht. Die Manschetten 14, 15 sind jeweils in eine ringförmige Fassung 24, 25 eingelegt oder mit letzterer verbunden, wobei die Fassung 24, 25 jeweils an einem mit dem Ringflansch 18, 19 verschraubbaren Gegenflansch 26, 27 befestigt ist. Die Manschetten 14, 15 und die Fassungen 24, 25 sowie die Gegenflansche 26, 27 bilden jeweils die Einspannvorrichtung 10, 11, die am Umfang des Gegenflansches 26, 27 in Lagern 28, 29 angeordnete Augenschrauben 30, 31 aufweisen, die in Ausnehmungen 32,33 am Umfang des Ringflansches 18, 19 einschwenkbar sind, so dass der Gegenflansch 26, 27 resp. die Einspannvorrichtung 10,11 mittels Muttern resp. Flügelmuttern 34, 35 oder anderen speziell dafür vorgesehenen Muttern oder Maschinenelementen an dem an der Förderleitung 2 befestigten Ringflansch 18, 19 und dem Leitungsende 3, 4 festspannbar sind.

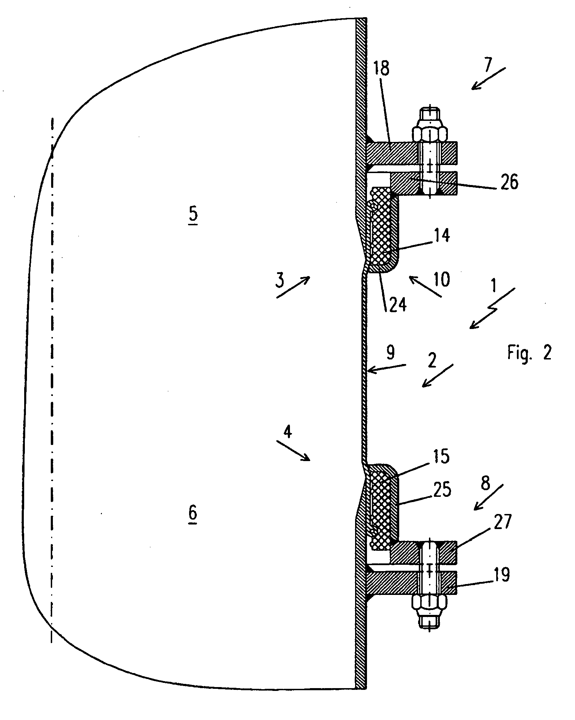

Anstelle von schwenkbaren Augenschrauben könnten zum gleichen Zweck auch am Gegenflansch 26, 27 oder am Ringflansch 18, 19 befestigte Gewindestifte verwendet werden (siehe Fig. 2).

Das Leitungselement 9 eignet sich bei ausreichender Länge letztlich auch zur Anbringung einer einfachen Dosier- und Verschlussvorrichtung, wie sie beispielsweise in dem DE-20 2007 011 U1 beschriben ist.

## Patentansprüche

1. Einrichtung (1) zur Verbindung getrennter, vorzugsweise einen zylindrischen Leitungsquerschnitt aufweisenden Leitungsenden (3, 4) zur Bildung einer wenigstens teilweise geschlossenen Förderleitung (2) für den Transport von schüttfähigen und/oder gasförmigen Stoffen, bestehend aus einer Einspannvorrichtung (10, 11) und einer wenigstens einem Leitungsende (3, 4) zugeordneten Befestigungsanordnung (7, 8), die mit der enin vorzugsweise flexibles Leitungselement (9) an dem Leitungsende (3, 4) im eingebanten Zustand dicht festhaltenden Einspannvorrichtung (10, 11) ausgebildet ist, **dadurch gekennzeichnet, dass** das stutzenförmige Leitungsende (3, 4) einen Abschnitt (16, 17) aufweist, an dessen Aussenseite ein Endabschnitt (12, 13) des Leitungselementes (9) mittels einer verformbaren Manschette (14, 15) der mit dem Leitungsende (3, 4) verbindbaren Einspannvorrichtung (10, 11) befestigbar ist und dass die Einspannvorrichtung (10,11) einen Gegenflansch (26, 27) aufweist, an dem eine der Manschette (14,15) zugewiesene Fassung (24, 25) befestigt ist, und die mit einem zur Einrichtung (1) gehörenden Ringflansch (18, 19) lösbar verbunden ist, der hinter dem Leitungsende an der Förderleitung (2) befestigbar ist.

2. Einrichtung nach Anspruch 1, **dadurch gekennzeichnet, dass** an dem Gegenflansch (26, 27) der Einspannvorrichtung (10, 11) resp. an dem Ringflansch (18, 19) verteilt Schrauben (30, 31) angeordnet sind, die Bohrungen des benachbarten Ringflansches (18, 19) resp. des Gegenflansches (26, 27) durchsetzen resp. in Ausnehmungen am Umfang des benachbarten Ringflansches (18, 19) resp. Gegenflansches (26, 27) einschwenkbar sind, an denen zur Erzeugung einer Spannkraft Schraubenmuttern (34, 35) angeordnet sind.

3. Einrichtung nach Anspruch 1 oder 2, **dadurch gekennzeichnet, dass** der/die Endabschnitte (12, 13) des Leitungselementes (9) nach den stutzenförmigen Leitungsenden (3, 4) ausgebildet sind.

4. Einrichtung nach einem der Ansprüche 1 bis 3, **dadurch gekennzeichnet, dass** das stutzenförmige Leitungsende (3, 4) einen sich nach innen stetig verändernder vorderer Abschnitt (16, 17) aufweist.

5. Einrichtung nach Anspruch 4, **dadurch gekennzeichnet, dass** der vordere Abschnitt (16, 17) der sich nach innen stetig verändernden Leitungsenden (3, 4) eine sich zur Oeffnung (5, 6) hin erstreckende, vorzugsweise zylindrische Innenform aufweist.

6. Einrichtung nach einem der Ansprüche 1 bis 5, **dadurch gekennzeichnet, dass** die Endabschnitte (12, 13) des Leitungselementes (9) und die Manschette (14, 15) die Oeffnung (5, 6) eines Leitungsendes (3, 4) jeweils überstehen, derart, dass das Leitungselement (9) einen gegenüber einem zylindrischen vorderen Abschnittt (16, 17) geringeren Durchtrittsquerschnitt bildet.

7. Einrichtung nach einem der Ansprüche 1 bis 6, **dadurch gekennzeichnet, dass** wenigstens ein Ende des Leitungselementes (9) durch einen wulstartigen Rand ausgebildet ist, der in der Manschette (14, 15) verankerbar ist.

8. Einrichtung nach einem der Ansprüche 1 bis 7, **dadurch gekennzeichnet, dass** die Manschette (14, 15) eine dem sich verjüngenden Abschnitt (16, 17) des Leitungsendes (3, 4) zugewandte, etwa parallel verlaufende Einspannfläche aufweist.

9. Einrichtung nach Anspruch 8, **dadurch gekennzeichnet, dass** die Einspannfläche umlaufende, auf das Leitungselement (9) einwirkende Erhebungen aufweist.

10. Einrichtung nach einem der Ansprüche 1 bis 9, **dadurch gekennzeichnet, dass** die Manschette (14, 15) aus einem metallischen oder nichtmetallischen Werkstoff gebildet ist.

11. Einrichtung nach einem der Ansprüche 1 bis 10, **dadurch gekennzeichnet, dass** das Leitungselelement (9) zur Anbringung einer Dosier- und Verschlussvorrichtung ausgestattet ist.

## Claims

1. Device (1) for connecting separate ends (3, 4) of a conduit preferably having a cylindrical cross section in order to form an at least partially closed conveying conduit (2) for transporting pourable and/or gaseous materials, consisting of a clamping device (10, 11) and a fastening arrangement (7, 8) associated with at least one conduit end (3, 4), the fastening arrangement being provided with the clamping device (10, 11) holding a preferably flexible conduit element (9) tightly against the conduit end (3, 4) in the assembled state, **characterised in that** the nozzle-shaped conduit end (3, 4) has a portion (16, 17) to the outer face of which an end portion (12, 13) of the conduit element (9) can be fastened by means of a deformable sleeve (14, 15) of the clamping device (10, 11) that can be connected to the conduit end (3, 4) and that the clamping device (10, 11) has a counter flange (26, 27) to which a socket (24, 25) directed towards the sleeve (14, 15) is fastened and which is releasably connected to an annular flange (18, 19) that forms part of the device (1) and can be fastened to the conveying conduit (2) downstream of the conduit end.

2. Device according to claim 1, **characterised in that** bolts (30, 31) are distributed over the counter flange (26, 27) of the clamping device (10, 11) and over the annular flange (18, 19) and traverse bores in the adjacent annular flange (18, 19) or counter flange (26, 27) or can be swung into recesses on the circumference of the adjacent annular flange (18, 19) or counter flange (26, 27) on which nuts (34, 35) are arranged in order to generate a clamping force.

3. Device according to claim 1 or claim 2, **characterised in that** the end portion/s (12, 13) of the conduit element (9) is/are provided downstream of the nozzle-shaped conduit ends (3, 4).

4. Device according to one of claims 1 to 3, **characterised in that** the nozzle-shaped conduit end (3, 4) has an inwardly continuously varying front portion (16, 17).

5. Device according to claim 4, **characterised in that** the front portion (16, 17) of the inwardly continuously varying conduit ends (3, 4) has a preferably cylindrical internal shape extending towards the opening (5, 6).

6. Device according to one of claims 1 to 5, **characterised in that** the end portions (12, 13) of the conduit element (9) and the sleeve (14, 15) each project beyond the opening (5, 6) of a conduit end (3, 4) in such a manner that the conduit element (9) forms a smaller flow passage than a cylindrical front portion (16, 17).

7. Device according to one of claims 1 to 6, **characterised in that** at least one end of the conduit element (9) is formed by a bead-like edge that can be anchored in the sleeve (14, 15).

8. Device according to one of claims 1 to 7, **characterised in that** the sleeve (14, 15) has an approximately parallel clamping surface directed towards the tapering portion (16, 17) of the conduit end (3, 4).

9. Device according to claim 8, **characterised in that** the clamping surface has circumferential protuberances acting on the conduit element (9).

10. Device according to one of claims 1 to 9, **characterised in that** the sleeve (14, 15) is formed of a metallic or non-metallic material.

11. Device according to one of claims 1 to 10, **characterised in that** the conduit element (9) is designed for the attachment of a metering and closing device.

## Revendications

1. Dispositif (1) destiné à la liaison d'extrémités de conduit (3, 4) séparées l'une de l'autre, de préférence dotées d'une section transversale cylindrique de circulation, en vue de former un conduit de convoyage (2) au moins partiellement fermé, dévolu au transport de matières en vrac et/ou gazeuses, comprenant un dispositif d'enserrement (10, 11) et un ensemble de fixation (7, 8) qui est affecté à au moins une extrémité (3, 4) du conduit, et est pourvu dudit dispositif d'enserrement (10, 11) retenant fermement de manière étanche à l'état intégré, sur ladite extrémité (3, 4) du conduit, un élément de canalisation (9) de préférence flexible, **caractérisé par le fait que** l'extrémité (3, 4) du conduit, configurée en un manchon, présente une région (16, 17) à la face extérieure de laquelle une région extrême (12, 13) de l'élément de canalisation (9) peut être fixée au moyen d'une manchette déformable (14, 15) du dispositif d'enserrement (10, 11), pouvant être relié à ladite extrémité (3, 4) du conduit ; et **par le fait que** ledit dispositif d'enserrement (10, 11) comporte une bride complémentaire (26, 27) à laquelle est fixée une monture (24, 25) assignée à ladite manchette (14, 15), et qui est reliée amoviblement à une aile annulaire (18, 19) faisant partie du dispositif (1) et pouvant être fixée au conduit de convoyage (2) derrière ladite extrémité de conduit.

2. Dispositif selon la revendication 1, **caractérisé par le fait que** des vis (30, 31) respectivement placées sur la bride complémentaire (26, 27) du dispositif d'enserrement (10, 11) ou sur l'aile annulaire (18, 19), de manière répartie, traversent des perçages respectivement pratiqués dans ladite aile annulaire voisine (18, 19) ou dans ladite bride complémentaire (26, 27), ou bien peuvent être respectivement insérées, par pivotement, dans des évidements ménagés sur le pourtour respectif de ladite aile annulaire voisine (18, 19) ou de ladite bride complémentaire (26, 27), vis sur lesquelles des écrous (34, 35) sont implantés afin d'engendrer une force de serrage.

3. Dispositif selon la revendication 1 ou 2, **caractérisé par le fait que** la/les région(s) extrême(s) (12, 13) de l'élément de canalisation (9) est (sont) ménagée(s) en concordance avec les extrémités (3, 4) du conduit, configurées en des manchons.

4. Dispositif selon l'une des revendications 1 à 3, **caractérisé par le fait que** l'extrémité (3, 4) du conduit, configurée en un manchon, comporte une région antérieure (16, 17) variant continûment vers l'intérieur.

5. Dispositif selon la revendication 4, **caractérisé par le fait que** la région antérieure (16, 17) des extrémités (3, 4) du conduit, variant continûment vers l'intérieur, présente une forme intérieure de préférence cylindrique, s'étendant en direction de l'ouverture (5, 6).

6. Dispositif selon l'une des revendications 1 à 5, **caractérisé par le fait que** la manchette (14, 15), et les régions extrêmes (12, 13) de l'élément de canalisation (9), sont respectivement en saillie au-delà de l'ouverture (5, 6) d'une extrémité (3, 4) du conduit, de façon telle que ledit élément de canalisation (9) forme une section transversale de passage diminuée par rapport à une région antérieure cylindrique (16, 17).

7. Dispositif selon l'une des revendications 1 à 6, **caractérisé par le fait qu'**au moins une extrémité de l'élément de canalisation (9) se présente comme un rebord de type bourrelet, pouvant être ancré dans la manchette (14, 15).

8. Dispositif selon l'une des revendications 1 à 7, **caractérisé par le fait que** la manchette (14, 15) comporte une surface d'enserrement s'étendant à peu près parallèlement, pointant vers la région (16, 17) de l'extrémité (3, 4) du conduit qui présente un rétrécissement.

9. Dispositif selon la revendication 8, **caractérisé par le fait que** la surface d'enserrement est munie de protubérances périphériques agissant sur l'élément de canalisation (9).

10. Dispositif selon l'une des revendications 1 à 9, **caractérisé par le fait que** la manchette (14, 15) est constituée d'un matériau métallique ou non métallique.

11. Dispositif selon l'une des revendications 1 à 10, **caractérisé par le fait que** l'élément de canalisation (9) est agencé pour la mise en place d'un système de dosage et d'obturation.
